# EUROPEAN PATENT APPLICATION

(11) **EP 4 838 877 A1**
(43) Date of publication of application: **11.11.2026**
(21) Application number: 25827149.3
(22) Date of filing: 14.03.2025
(51) Int. Cl.: H04N 9/31, H04N 9/67, G06N 20/00

(54) **ELECTRONIC DEVICE AND METHOD OF CONTROLLING SAME**

(30) Priority: 26.06.2024 KR 20240083551
(71) Applicant: Samsung Electronics Co., Ltd., Suwon-si, Gyeonggi-do 16677 (KR)
(72) Inventor: PARK, Jaesung, Suwon-si, Gyeonggi-do 16677 (KR)
(74) Representative: Appleyard Lees IP LLP
(86) International application number: PCT/KR2025/003311
(87) International publication number: WO 2026/005185

(57) **Abstract**

An electronic device includes: an image projection device; a camera; a memory storing instructions; and at least one processor including a processing circuitry. The at least one processor is configured to control the image projection device to output an image including a predetermined pattern onto a projection surface, acquire a captured image of the projection surface by using the camera, identify feature information including continuity information of a line included in the predetermined pattern in the captured image, identify at least a partial region of the projection surface as an output region based on the feature information, and control the image projection device to project an input image onto the identified output region.

## Description

### [TECHNICAL FIELD]

One or more example embodiments of the disclosure relate to an electronic device and a control method thereof, and more particularly, to an electronic device for projecting an image and a control method thereof.

### [BACKGROUND ART]

Recently, various projectors have been used in accordance with the development of electronic and optical technologies. The projector may refer to an electronic device for projecting light onto a projection surface (or screen) to form an image on the projection surface. Various technologies related to the projector, such as image size adjustment, keystone correction, and screen adaptation, have gradually developed.

### [DISCLOSURE]

### [TECHNICAL SOLUTION]

According to one or more embodiments of the present disclosure, provided is an electronic device including: an image projection device; a camera; a memory storing one or more instructions; and at least one processor including a processing circuitry, wherein the at least one processor is configured to execute the one or more instructions individually or collectively, to: control the image projection device to output an image including a predetermined pattern onto a projection surface; control the camera to acquire a captured image of the projection surface; identify feature information including continuity information of a line included in the predetermined pattern in the captured image; identify at least a partial region of the projection surface as an output region based on the feature information; and control the image projection device to project an input image onto the identified output region.

The at least one processor may be further configured to execute the one or more instructions individually or collectively, to: control the image projection device to output the image including a plurality of grid regions defined by grid lines onto the projection surface, identify continuity information of a grid line in the captured image, identify at least a partial region of the projection surface as the output region based on the continuity information of the grid line.

The at least one processor may be further configured to execute the one or more instructions individually or collectively, to: identify the feature information including at least one of texture complexity information including fine texture information for each grid region in the captured image, homogeneity information including information on a brightness change between adjacent grid regions adjacent to each grid region, or chroma information including information on a color change between the adjacent grid regions adjacent to each grid region, and identify the output region on the projection surface based on at least one of the line continuity information, the texture complexity information, the homogeneity information, or the chroma information.

The at least one processor may be further configured to execute the one or more instructions individually or collectively, to: convert the captured image into a luminance-chrominance (YUV) image, identify at least one of the line continuity information, the texture complexity information, and the homogeneity information based on a Y signal included in the YUV image, and identify a chroma signal based on UV signals included in the YUV image.

The at least one processor may be further configured to execute the one or more instructions individually or collectively, to: separate the Y signal included in the YUV image into a reflectance component and an illumination component, identify the line continuity information corresponding to each grid region by applying a straight line estimation algorithm to the reflectance component, identify the texture complexity information corresponding to each grid region based on a difference between first contour line information identified from the Y signal and second contour line information identified from the reflectance component, and identify the homogeneity information corresponding to each grid region based on whether standard deviation of a homogeneity value identified from the reflectance component is greater than or equal to a threshold value.

The at least one processor may be further configured to execute the one or more instructions individually or collectively, to separate the UV signals included in the YUV image into the reflectance component and an illumination component, and identify the chroma information corresponding to each grid region based on a distance between U and V components identified from the reflectance component.

The at least one processor may be further configured to execute the one or more instructions individually or collectively, to identify the output region on the projection surface by applying a different weight to each feature information based on an importance of the feature information acquired for each grid region.

The at least one processor may be further configured to execute the one or more instructions individually or collectively, to identify the output region on the projection surface by applying a different weight to the feature information based on at least one of a type or a category of the input image.

The at least one processor may be further configured to execute the one or more instructions individually or collectively, to identify the output region on the projection surface by applying a dot product operation or a machine learning clustering algorithm to the feature information acquired for each grid region.

The at least one processor may be further configured to execute the one or more instructions individually or collectively, to use at least one trained artificial intelligence model for identifying at least one of the feature information or the output region.

The at least one processor may be further configured to execute the one or more instructions individually or collectively, to control the image projection device to adjust the input image to correspond to a size of the identified output region and project the adjusted image.

According to one or more embodiments of the present disclosure, provided is a control method of an electronic device, the method including: outputting an image including a predetermined pattern onto a projection surface; acquiring a captured image of the projection surface; identifying feature information including continuity information of a line included in the predetermined pattern in the captured image; identifying at least a partial region of the projection surface as an output region based on the feature information; and projecting an input image onto the identified output region.

According to one or more embodiments of the present disclosure, provided is a non-transitory computer-readable medium storing a computer instruction for causing an electronic device, when executed by at least one processor of the electronic device, to perform: outputting an image including a predetermined pattern onto a projection surface, acquiring a captured image of the projection surface, identifying feature information including continuity information of a line included in the predetermined pattern in the captured image, identifying at least a partial region of the projection surface as an output region based on the feature information, and projecting an input image onto the identified output region.

### [DESCRIPTION OF DRAWINGS]

The above or other aspects, features, or advantages of example embodiments of the present disclosure will become more apparent from the following description taken in conjunction with the accompanying drawings.
FIG. 1 is a view for describing an operation of an electronic device according to one or more embodiments.
FIG. 2A is a block diagram showing a configuration of an electronic device according to one or more embodiments.
FIG. 2B is a view for describing a configuration of an electronic device according to one or more embodiments.
FIG. 3 is a flowchart for describing a control method of an electronic device according to one or more embodiments.
FIG. 4 is a flowchart for describing a control method of an electronic device according to one or more embodiments.
FIGS. 5A to 5C are views for describing a method for providing a pattern image for surface search according to one or more embodiments.
FIGS. 6A to 6D, 7A, and 7B are views for describing a principle of a method for separating features of a projection surface according to one or more embodiments.
FIG. 8 is a view for describing a method for separating features of a projection surface according to one or more embodiments.
FIG. 9 is a view for describing a method for acquiring feature information of a projection surface according to one or more embodiments.
FIGS. 10A to 10C are views for describing methods for acquiring feature information of a projection surface according to one or more embodiments.
FIGS. 11 and 12 are views for describing line continuity information according to one or more embodiments.
FIGS. 13A to 13C are views for describing chroma information according to one or more embodiments.
FIG. 14 is a view for describing a method for identifying an output region according to one or more embodiments.
FIG. 15 is a view for describing a method for determining a final output region according to one or more embodiments.
FIG. 16 is a view for describing a method for determining a final output region according to one or more embodiments.
FIG. 17 is a view for describing a method for determining a final output region according to one or more embodiments.

### [BEST MODE]

Terms used in this specification will be briefly described, and one or more example embodiments of the present disclosure will then be described in detail.

General terms currently widely used are selected as terms used in embodiments of the present disclosure in consideration of their functions in the present disclosure, and may be changed based on the intentions of those skilled in the art or a judicial precedent, the emergence of a new technique, or the like. In addition, in a specific case, terms arbitrarily selected by an applicant may be present. In this case, the meanings of such terms are mentioned in detail in corresponding descriptions of the disclosure. Therefore, the terms used in the present disclosure need to be defined on the basis of the meanings of the terms and the contents throughout the present disclosure rather than simple names of the terms.

In this specification, an expression "have", "may have", "include", "may include", or the like indicates the presence of a corresponding feature (for example, a numerical value, a function, an operation, or a component such as a part), and does not exclude the presence of an additional feature.

In the present disclosure, an expression "A or B", "least one of A and/or B" or "one or more of A and/or B" or the like, may include all possible combinations of items enumerated together. For example, "A or B", "at least one of A and B", or "at least one of A or B" may indicate all of 1) a case in which at least one A is included, 2) a case in which at least one B is included, or 3) a case in which both of at least one A and at least one B are included.

Expressions "first", "second", or the like used in the disclosure may qualify various components regardless of the sequence or importance of the components. These expressions are used only to distinguish one component and another component from each other, and do not limit the corresponding components.

If any component (for example, a first component) is described as being "(operatively or communicatively) coupled with/to or connected to" another component (for example, a second component), it should be understood that any component may be directly coupled to another component or may be coupled to another component through yet another component (for example, a third component).

An expression "configured (or set) to" used in the present disclosure may be replaced by an expression "suitable for", "having the capacity to", "designed to", "adapted to", "made to" or "capable of" based on a context. A term "configured (or set) to" may not necessarily indicate "specifically designed to" in hardware.

Instead, an expression a device "configured to" in any context may indicate that the device may "perform~" together with another device or component. For example, a "processor configured (or set) to perform A, B, and C" may indicate a dedicated processor (for example, an embedded processor) that may perform the corresponding operations or a generic-purpose processor (for example, a central processing unit (CPU) or an application processor) that may perform the corresponding operations by executing one or more software programs stored in a memory device.

A term of a singular number may include its plural number unless explicitly indicated otherwise in the context. It should be understood that a term "include" or "formed of" used in this application specifies the presence of features, numerals, steps, operations, components, parts, or combinations thereof, which are mentioned in the specification, and does not preclude the presence or addition of one or more other features, numerals, steps, operations, components, parts or combinations thereof.

In the embodiments, a "module" or a "~er/or" may perform at least one function or operation, and be implemented by hardware or software or be implemented by a combination of hardware and software. In addition, a plurality of "modules" or a plurality of "~ers/~ors" may be integrated in at least one module and implemented by at least one processor (not shown) except for a "module" or a "~er/or" that may need to be implemented by specific hardware.

Reference throughout the present disclosure to "one embodiment," "an embodiment," "an example embodiment," or similar language may indicate that a particular feature, structure, or characteristic described in connection with the indicated embodiment is included in at least one embodiment of the present solution. Thus, the phrases "in one embodiment", "in an embodiment," "in an example embodiment," and similar language throughout this disclosure may, but do not necessarily, all refer to the same embodiment. The embodiments described herein are example embodiments, and thus, the disclosure is not limited thereto and may be realized in various other forms.

It is to be understood that the specific order or hierarchy of blocks in the processes/flowcharts disclosed are an illustration of exemplary approaches. Based upon design preferences, it is understood that the specific order or hierarchy of blocks in the processes/flowcharts may be rearranged. Further, some blocks may be combined or omitted. The accompanying claims present elements of the various blocks in a sample order, and are not meant to be limited to the specific order or hierarchy presented.

The embodiments herein may be described and illustrated in terms of blocks, as shown in the drawings, which carry out a described function or functions. These blocks, which may be referred to herein as units or modules or the like, or by names such as device, logic, circuit, controller, counter, comparator, generator, converter, or the like, may be physically implemented by analog and/or digital circuits including one or more of a logic gate, an integrated circuit, a microprocessor, a microcontroller, a memory circuit, a passive electronic component, an active electronic component, an optical component, and the like.

In the present disclosure, the articles "a" and "an" are intended to include one or more items, and may be used interchangeably with "one or more." Where only one item is intended, the term "one" or similar language is used. For example, the term "a processor" may refer to either a single processor or multiple processors. When a processor is described as carrying out an operation and the processor is referred to perform an additional operation, the multiple operations may be executed by either a single processor or any one or a combination of multiple processors.

Meanwhile, the various elements and regions in the drawings are schematically shown. Therefore, the spirit of the disclosure is not limited by relative sizes or intervals shown in the accompanying drawings.

Hereinafter, the embodiments of the disclosure are described in detail with reference to the accompanying drawings.

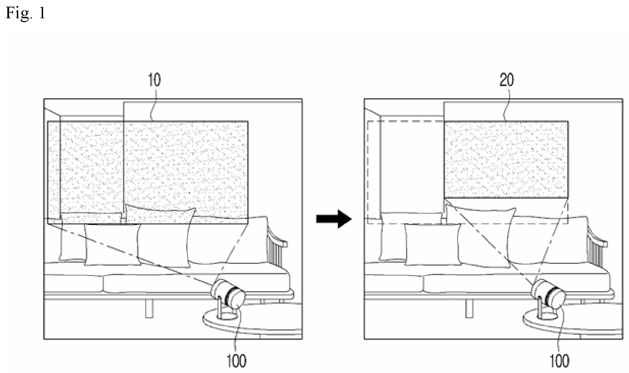

FIG. 1 is a view for describing an operation of an electronic device according to one or more embodiments.

According to an embodiment, an electronic device 100 may be implemented as a projector for projecting an image onto any surface such as a wall or a screen, or any of various types of devices having an image projection function.

According to an embodiment, the electronic device 100 may provide a screen auto-setting technology for automatically setting an image projection screen. For example, a projection surface may have an irregular structure or a uniquely shaped surface. In this case, a related art electronic device may not search for a proper projection screen if the related electronic device determines the projection screen by simply recognizing a predefined pattern (e.g., wall corner). In addition, a related art electronic device may not accurately search for the proper projection screen in an environment having dark or bright ambient illuminance.

On the other hand, as an example, the electronic device 100 may provide the projection screen at a most ideal position based on a feature of the projection surface. For example, the electronic device 100 may search for a homogeneous region from a projectable region 10 as shown in FIG. 1, and provide a screen 20 of an ideal size at an ideal position. Hereinafter, a method for searching for such a projection region may also be referred to as a surface search.

Hereinafter, the description presents various embodiments of searching for and providing a projection surface at a most suitable projection region as a projection screen by considering a surface feature of the projection surface (e.g., wall surface) and an influence of illumination.

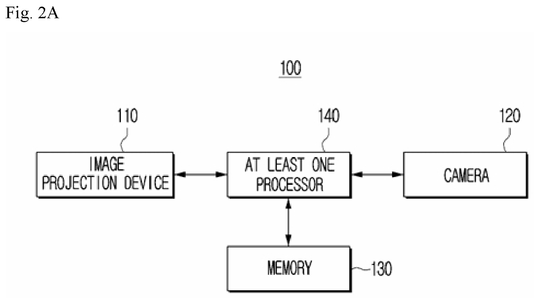

FIG. 2A is a block diagram showing a configuration of an electronic device according to one or more embodiments.

Referring to FIG. 2A, the electronic device 100 may include an image projection device 110, a camera 120, a memory 130, and at least one processor 140. According to an embodiment, the electronic device 100 may be implemented as a projector configured to project an image onto a projection surface such as a wall or a screen, or any of the various types of devices having an image projection function.

The image projection device 110 may perform a function of projecting light toward outside to express an image and outputting the image onto the projection surface. Here, the projection surface may be a part of a physical space where the image is output. The image projection device 110 may include various specific components such as at least one light source among a lamp, a light-emitting diode (LED), or a laser, a projection lens, and a reflector.

The image projection device 110 may project the image by using one of a variety of projection methods (e.g., cathode-ray tube (CRT) method, liquid crystal display (LCD) method, digital light processing (DLP) method, or laser method). The image projection device 110 may include at least one the light source.

The image projection device 110 may output the image in an aspect ratio of 4:3, an aspect ratio of 5:4, or a wide aspect ratio of 16:9, based on a purpose of the electronic device 100, a user setting, or the like, and may output the image having any of various resolutions such as a wide video graphics array (WVGA, 854*48 pixels), a super video graphics array (SVGA, 800*600 pixels), an eXtended graphics array (XGA, 1024*768 pixels), a wide extended graphics array (WXGA, 1280*720 pixels), a WXGA (1280*800 pixels), a super extended graphics array (SXGA, 1280*1024 pixels), an ultra extended graphics array (UXGA, 1600*1200 pixels) and full high-definition (FHD, 1920*1080 pixels), based on the aspect ratio.

In addition, the image projection device 110 may perform various functions for adjusting the projected image under control of the at least one processor 140. For example, the image projection device 110 may perform a zoom function, a lens shift function, or the like.

The camera 120 may be turned on and capture the image based on a predetermined event. The camera 120 may convert the captured image into an electrical signal and generate image data based on the converted signal. For example, the camera 120 may convert a subject into an electrical image signal through a semiconductor optical element (or a charge coupled device (CCD)), and amplify the converted electrical image signal and convert the amplified signal into a digital signal and then signal-processed.

The memory 130 may store data related to one or more embodiments. The memory 130 may be implemented in a form of a memory embedded in the electronic device 100 or in a form of a memory detachable from the electronic device 100, based on a data storage purpose. For example, data for driving the electronic device 100 may be stored in the memory embedded in the electronic device 100, and data for an extension function of the electronic device 100 may be stored in the memory detachable from the electronic device 100. The memory embedded in the electronic device 100 may be implemented as, for example but not limited to, at least one of a volatile memory (for example, a dynamic random access memory (DRAM), a static RAM (SRAM), or a synchronous dynamic RAM (SDRAM)) or a nonvolatile memory (for example, an one time programmable read only memory (OTPROM), a programmable ROM (PROM), an erasable and programmable ROM (EPROM), an electrically erasable and programmable ROM (EEPROM), a mask ROM, or a flash ROM), a flash memory (for example, a NAND flash, or a NOR flash), a hard drive, or a solid state drive (SSD)). In addition, the memory detachable from an electronic device 100 may be implemented in a form of a memory card (for example but not limited to, a compact flash (CF), a secure digital (SD), a micro secure digital (Micro-SD), a mini secure digital (Mini-SD), an extreme digital (xD), or a multi-media card (MMC)), or an external memory which may be connected to a universal serial bus (USB) port (for example, a USB memory).

As an example, the memory 130 may store various information related to keystone correction and/or various information related to luminance correction. For example, the memory 130 may store various information acquired during a keystone correction process, such as a conversion matrix. For example, the memory 130 may store various information acquired during a luminance correction process, for example, a luminance correction coefficient.

The at least one processor 140 may include various processing circuits and/or a multiple processor. For example, the term "processor" as used in the present disclosure, including the claims, may include the various processing circuits including at least one processor, at least one of which may be configured to individually and/or collectively perform various functions described herein in a distributed manner. As used in the present disclosure, if "the processor", "at least one processor", and "one or more processors" are described as being configured to perform the various functions, these terms may encompass, for example, a situation where a single processor is operated without a limitation. A certain processor may perform some of the cited functions and another processor may perform the remaining cited functions, and the single processor may perform all of the cited functions. Additionally, at least one processor may include a combination of processors for performing the various enumerated/disclosed functions, for example in the distributed manner. The at least one processor 140 may control overall operations of the electronic device 100 by executing a program instruction to accomplish or perform the various functions. In detail, the at least one processor 140 may be connected to each component of the electronic device 100 and control the overall operations of the electronic device 100. For example, the at least one processor 140 may be operatively connected to a display and the memory 130. The at least one processor 140 may be the single processor or a plurality of processors.

The at least one processor 140 may perform the operations of the electronic device 100 according to the various embodiments of the present disclosure by executing at least one instruction stored in the memory 130.

The at least one processor 140 may include, for example but not limited to, at least one of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. The at least one processor 140 may control one or any combination of other components of the electronic device 100 and perform an operation related to communication or data processing. The at least one processor 140 may execute at least one program or instruction stored in the memory 130. For example, the at least one processor 140 may perform a method according to one or more embodiments of the present disclosure by executing the instruction stored in the memory 130.

If the method according to one or more embodiments of the present disclosure includes a plurality of operations, the plurality of operations may be performed by the single processor or by the plurality of processors. For example, a first operation, a second operation, and a third operation may be performed by the method according to one or more embodiments. In this case, the first operation, the second operation, and the third operation may all be performed by a first processor. Alternatively, the first operation and the second operation may be performed by the first processor (e.g., generic-purpose processor), and the third operation may be performed by a second processor (e.g., artificial intelligence-only processor).

The at least one processor 140 may be implemented as a single-core processor including a single core, or may be implemented as at least one multi-core processor including multi cores (e.g., homogeneous multi cores or heterogeneous multi cores). If the at least one processor 140 is implemented as the multi-core processor, each of the multi cores included in the multi-core processor may include a processor internal memory such as a cache memory or an on-chip memory, and a common cache shared by the multi cores may be included in the multi-core processor. In addition, each (or some) of the multi-cores included in the multi-core processor may independently read and perform a program instruction for implementing the method according to one or more embodiments of the present disclosure, or all (or some) of the multi cores may be linked with each other to read and perform the program instruction for implementing the method according to one or more embodiments of the present disclosure.

In the embodiments of the disclosure, the processor may indicate a system-on-chip (SoC) in which at least one processor and other electronic components are integrated with each other, the single-core processor, the multi-core processor, or a core included in the single-core processor or the multi-core processor. Here, the core may be implemented as the CPU, the GPU, the APU, the MIC, the DSP, the NPU, the hardware accelerator, the machine learning accelerator, or the like. However, the embodiments of the disclosure are not limited thereto. Hereinafter, for convenience of description, the at least one processor 140 may also be referred to as the processor 140.

According to an embodiment, the processor 140 may control the image projection device 110 to output an image of a predetermined pattern onto the projection surface. As an example, the image of the predetermined pattern may be an image including a plurality of grid regions defined by grid lines. For example, each of the plurality of grid regions may be a square region of a predetermined size, but is not limited thereto, and may also be a rectangular region. For example, the predetermined size may be predetermined at the time of manufacturing the electronic device 100, or may be set/changed by a user command. For example, the predetermined size may be automatically determined based on the size, resolution, or the like of the image.

For the convenience of description, the following description is provided assuming that the image of the predetermined pattern is the image (hereinafter, a grid image) including the plurality of grid regions.

According to an embodiment, the processor 140 may acquire the captured image of the projection surface by using the camera 120 and analyze the captured image to acquire feature information of the projection surface (or feature information or unique information). As an example, the feature information of the projection surface may include at least one feature information of a different type. For example, the feature information of the projection surface may include at least one of line continuity information of a grid line, texture information, homogeneity information, or chroma (or color uniformity) information.

According to an embodiment, the processor 140 may acquire the feature information in units of the plurality of grid regions included in the captured image. As an example, the processor 140 may acquire at least one of the line continuity information, the texture complexity information, the homogeneity information, or the chroma information in the units of the plurality of grid regions included in the grid image. As an example, the captured image may be an image capturing the projection surface onto which the grid image is output, and may thus include the grid image output onto the projection surface.

According to an embodiment, the processor 140 may convert the captured image into a luminance (Y)-chrominance (U-V) image. For example, the captured image may be a red-green-blue (RGB) domain image. Accordingly, the processor 140 may convert the RGB domain image into a luminance-chrominance (YUV) domain image. RGB may be expressed as three values respectively representing an intensity of red, green, and blue components in each channel. If data of the image has 8 bits, each channel may have a value between 0 and 255, and for example, (255, 0, 0) may represent red, (0, 255, 0) may represent green, and (0, 0, 255) may represent blue. YUV may be a color space including three elements of the luminance (Y) and the chrominance (U-V). Y is a brightness component, and may thus have luminance information, and U or V may have chrominance information on a color. Each of U and V values may represent a difference between a color of a corresponding pixel and a color of its surrounding pixel for each pixel.

According to an embodiment, the processor 140 may convert an RGB image to a YUV image by using at least one of a predetermined equation, rule, or algorithm.

The processor 140 may acquire the feature information of the projection surface based on the YUV image.

As an example, the processor 140 may identify the continuity information of the grid line, the texture complexity information, and the homogeneity information based on a Y signal (or a Y domain signal) included in the YUV image.

As an example, the processor 140 may identify a chroma signal based on UV signals included in the YUV image.

According to an embodiment, the processor 140 may process the YUV image to separate the YUV image into a reflectance component (or reflectance signal) and an illumination component (or illumination signal). The reason for separating the YUV image into the reflectance component and the illumination component is to remove an influence of an illumination condition so as to understand an actual color or material of the projection surface.

The reflectance component may represent a degree to which a surface of an object, such as the projection surface, reflects light of a specific wavelength. The reflectance component may depend on a color and a texture of the projection surface.

The illumination component may represent a property of light that is incident on the projection surface. The illumination component may be determined by a type, an intensity, an angle, a spectral distribution, or the like of the light source.

As an example, the processor 140 may perform image decomposition on the YUV image to separate the reflectance component and the illumination component from each other. For example, the image decomposition may be expressed as I(x,y)=R(x,y)*L(x,y) based on the assumption that an image I may be expressed as the product of reflectance R and illumination L. Here, I(x,y) represents a brightness value of the pixel in the image, R(x,y) indicates the reflectance, L(x,y) represents the illumination, and (x,y) represents image coordinates. However, the disclosure is not limited thereto, and the YUV image may be separated into the reflectance component and the illumination component by using retinex theory, Bayesian framework, deep learning, practical algorithm, single-scale retinex (SSR), filtering (e.g., Gaussian filtering), or the like.

According to an embodiment, the processor 140 may acquire the feature information of the projection surface based on the reflectance component separated from the YUV image. As an example, the feature information of the projection surface may include at least one of the line continuity information, the texture information, the homogeneity information, or the chroma information.

The line continuity information may be the continuity information of the grid line included in the captured image. The continuity of the grid line may be information on a degree to which the grid line is close to a straight line. For example, the grid line may include at least one of a horizontal grid line or a vertical grid line.

As an example, the line continuity information may be acquired using a straight line estimation algorithm. For example, the straight line estimation algorithm may include at least one of a random sample consensus (RANSAC), a least squares method (LSM), a Hough transform, a least absolute deviations (LAD), a total least squares (TLS), or an orthogonal distance regression (ODR).

As an example, the processor 140 may identify (or detect) each grid line from the captured image, and acquire, as the line continuity information, information on a degree to which each grid line corresponds to an outlier or an extent to which the continuity of the line is maintained from the identified straight line by using the straight line estimation algorithm. For example, the line continuity information may include line continuity values corresponding to coordinates of each grid region. The coordinates of each grid region may include coordinates representing a position of each grid region, for example, (x,y) coordinates. Values corresponding to the coordinates of each grid region may include a numerical value representing the degree to which the grid line corresponding to each of four corners of each grid region is the outlier.

The texture information may be visual pattern information representing an expression feature of the projection surface included in the captured image. As an example, the texture information may include the texture complexity information. The texture complexity may represent structural and/or statistical features of a texture, and may represent a degree to which a texture pattern is complex and/or diverse. As an example, at least one of a statistical method, a geometric method, or a transform-based method may be used to acquire the texture complexity.

According to an embodiment, the processor 140 may acquire the texture information for each grid region based on the Y signal in the captured image. For example, the texture information may include texture values corresponding to the coordinates of each grid region. As an example, the processor 140 may acquire fine texture values of each grid region and assign the fine texture values to coordinate values of each grid region.

In this case, the image signal acquired from the captured image may be sensitive to an ambient illumination environment, which may result in a risk of failing to acquire the pattern or texture of the projection surface (e.g., wall surface) from the captured image. Accordingly, the processor 140 may acquire a texture complexity value based on a difference value between the reflectance component and contour line information detected from the Y signal. For example, the processor 140 may acquire the reflectance component from the Y signal by separating the Y signal into the reflectance and illumination components through the image decomposition.

As an example, the processor 140 may acquire the fine texture value of each grid region by using an analysis function (or an analysis algorithm or an analysis rule). For example, the processor 140 may acquire the fine texture value of each grid region by using a co-occurrence matrix. The co-occurrence matrix may enable the processor 140 to acquire a numerical feature of the texture by using a spatial relationship between similar gray tones, and to represent, compare, and/or classify the texture by using the acquired numerical feature. Each of Equations 1 to 4 below may be a subset of a standard feature that may be derived from a normalized co-occurrence matrix. [Equation 1] $Angular 2 nd Moment = {\sum }_{i} {\sum }_{j} p {\left[i, j\right]}^{2}$ [Equation 2] $Contrast = {\sum }_{i = 1}^{Ng} {\sum }_{j = 1}^{Ng} {n}^{2} p \left[i, j\right] , where \left|i-j\right| = n$ [Equation 3] $Correlation = \frac{{\sum }_{i = 1}^{Ng} {\sum }_{j = 1}^{Ng} \left(i, j\right) p \left[i, j\right] - {μ}_{x} {μ}_{y}}{{σ}_{x} {σ}_{y}}$ [Equation 4] $Entropy = - {\sum }_{i} {\sum }_{j} p \left[i, j\right] ln \left(p\left[i, j\right]\right)$

Here, p[I, j] represents an [i, j]th entry in a gray-tone spatial dependence matrix, and Ng represents the number of unique gray levels in a quantized image.

According to an embodiment, the processor 140 may acquire the homogeneity information for each grid region based on the Y signal in the captured image. For example, the homogeneity information may include homogeneity values corresponding to the coordinates of each grid region. As an example, the processor 140 may acquire homogeneity values (e.g., contour detection) of each grid region and assign the homogeneity values to the coordinate values of each grid region.

The homogeneity information may include information on similarity between brightness values of pixels included in a grid output image. For example, the homogeneity information may include information on a brightness change between adjacent grid regions for each grid region in the grid output image. As an example, at least one of standard deviation, gradient, or variance may be used to acquire the homogeneity information.

In this case, the image signal acquired from the captured image may be sensitive to the ambient illumination environment, which may result in the risk of failing to acquire the pattern or structure of the projection surface (e.g., wall surface) from the captured image. Accordingly, the processor 140 may acquire the homogeneity value based on the reflectance component acquired from the Y signal. For example, the processor 140 may acquire the reflectance component from the Y signal by separating the Y signal into the reflectance component and the illumination component through the image decomposition. For example, the reflectance may maximize local contrast, thus enabling detection of even a fine contour line due to the texture or homogeneity feature of the wall surface.

As an example, the processor 140 may calculate the homogeneity information for each grid region based on whether a standard deviation σ_{H} of the homogeneity value acquired from a Y signal value of each grid region in the captured image is greater than or equal to at least one threshold value σ_{Thr1}. For example, the smaller the standard deviation, the higher the homogeneity feature. However, for convenience of operation, the homogeneity feature of each grid region may be classified based on one or more threshold values. For example, the processor 140 may classify the homogeneity feature into two levels based on one threshold value, or classify the homogeneity feature into three levels based on two threshold values.

The chroma information may include information on similarity between color values of the pixels included in the grid output image. For example, the chroma information may include information on a color change between the adjacent grid regions for each grid region in the grid output image. As an example, at least one of the standard deviation, the gradient, or the variance may be used to acquire the chroma information.

According to an embodiment, the processor 140 may acquire the chroma information for each grid region based on the UV signals in the captured image. For example, the chroma information may include chroma values corresponding to the coordinates of each grid region. As an example, the processor 140 may acquire the chroma values of each grid region and assign the chroma values to the coordinate values of each grid region.

As an example, the processor 140 may calculate the chroma value based on a distance between the U and V components (e.g., |U| + |V|) of the UV signals in the captured image. The chroma value calculated in this way may represent a color difference between the grid regions. For example, the processor 140 may calculate a difference between the U and V components by using an Euclidean distance, but is not limited thereto. For example, the Euclidean distance between two points (u1, v1) and (u2, v2) may be calculated as $\sqrt{{\left({u}_{2}-{u}_{1}\right)}^{2} + {\left({ν}_{2}-{ν}_{1}\right)}^{2}}$.

As an example, the processor 140 may calculate the chroma information for each grid region based on whether a standard deviation σ_{C} of the chroma value acquired using the UV signal values of each grid region in the captured image is greater than or equal to a threshold value σ_{Thr2}. For example, the smaller the standard deviation, the higher a uniformity feature. However, for the convenience of operation, the uniformity feature of each grid region may be classified based on one or more threshold values. For example, the processor 140 may classify the uniformity feature into two levels based on one threshold value, or classify the uniformity feature into three levels based on two threshold values.

According to an embodiment, the processor 140 may identify an output region on the projection surface based on the feature information of the projection surface.

As an example, the processor 140 may identify the output region on the projection surface based on at least one of the line continuity information, the texture complexity information, the homogeneity information, or the chroma information.

As an example, the processor 140 may perform processing to reduce an amount of data in the feature information acquired for each grid region. For example, the feature information acquired for each grid region may be expressed as a continuous signal value. The processor 140 may perform quantization or binarization processing to approximate continuous values of a signal into discrete values. Accordingly, the processor 140 may minimize information loss while reducing an amount of required data. For example, in case of the quantization, each feature information may be classified into a plurality of ranges based on one or more threshold values (thresholding), and in case of the binarization, each feature information may be classified into two ranges based on one threshold value. For example, the processor 140 may perform 4-bit quantization to represent a feature value using 16 values.

As an example, the feature information may include at least one of the line continuity information, the texture complexity information, the homogeneity information, or the chroma information, acquired for each grid region. However, for the convenience of description, the following description is provided assuming that the line continuity information, the texture complexity information, the homogeneity information, and the chroma information are all acquired for each grid region.

According to an embodiment, the processor 140 may identify the output region on the projection surface based on a value (hereinafter, code value) calculated using the quantization or binarization of each feature information. For example, the processor 140 may identify the output region on the projection surface based on the code value calculated using the quantization or binarization for each grid region.

According to an embodiment, the processor 140 may identify the output region on the projection surface by performing an operation on the feature information calculated for each grid region. As an example, the processor 140 may identify the output region on the projection surface by performing an operation on the code value of each feature information calculated for each grid region. For example, the processor 140 may identify the output region on the projection surface based on an operation value of each grid region calculated using a dot product for the code value of each feature information calculated for each grid region. For example, the dot product (inner product or scalar product) may be an operation that multiplies components at the same position of each vector and then adds all dot product results. For example, the processor 140 may identify a1*b1*c1*d1 as a first operation value of a first grid region if code values of the line continuity information, the texture complexity information, the homogeneity information, and the chroma information calculated for the first grid region are a1, b1, c1, and d1, respectively, and identify a2*b2*c2*d2 as a second operation value of a second grid region if code values of the line continuity information, the texture complexity information, the homogeneity information, and the chroma information calculated for the second grid region are a2, b2, c2, and d2, respectively. For example, the processor 140 may identify the grid region where the dot product result is 1 as a valid grid region that may be used as the output region if binarization code values of the line continuity information, the texture complexity information, the homogeneity information, and the chroma information calculated for the first grid region are 1, 0, 1, and 0, respectively.

According to an embodiment, the processor 140 may identify the output region on the projection surface by applying a predetermined algorithm to the feature information calculated for each grid region. As an example, the predetermined algorithm may include a machine learning clustering algorithm. The machine learning clustering algorithm may be an unsupervised learning technique that divides data into groups having similar features. For example, the machine learning clustering algorithm may include a decision tree, a random forest, K-means clustering, hierarchical clustering, or the like. For example, the processor 140 may classify the wall surface into a plurality of regions based on its feature by using a simplest machine learning algorithm, such as the decision tree. For example, the processor 140 may classify the wall surface into the plurality of regions by using a more robust method, such as the random forest. For example, the processor 140 may classify the wall surface into the plurality of regions by using an ensemble method that couples the plurality of models to each other. For example, the processor 140 may classify the wall surface into the plurality of regions by using the ensemble method such as bagging or boosting.

According to an embodiment, the processor 140 may use distance information between the respective grid regions in the clustering algorithm to identify a largest possible output region on the projection surface. As an example, the processor 140 may classify the grid regions that are close to each other as end terminals in the clustering algorithm. For example, the processor 140 may perform the clustering algorithm by setting a distance between all the grid regions adjacent to a specific grid region as a first variable x1, and a feature information value corresponding to the specific grid region, for example, its line continuity information, texture complexity information, homogeneity information, and chroma information, as second to fifth variables x2 to x5, respectively. For example, the processor 140 may calculate the first variable as the distance between all the grid regions adjacent to the specific grid region based on a Manhattan distance (or taxi distance or L1 norm) as shown in Equation 5 below. The Manhattan distance is one of methods for measuring a distance between two points and may be calculated as a sum of the distances traveled along each axis. [Equation 5] $d \left(A, B\right) = {\sum }_{i = 1}^{n} \left|{a}_{i}-{b}_{i}\right|$

According to an embodiment, the processor 140 may identify the output region at a certain rate, such that the image may provide a viewing experience most similar to an original image if played at the certain rate. As an example, the processor 140 may perform a fast and accurate grid search operation under a constraint that a number of grid regions in width and height remains constant.

According to an embodiment, the processor 140 may assign a different priority to the feature information acquired in each grid region based on its importance. For example, the processor 140 may apply a different weight to each feature information based on its priority. For example, the sum of the weights may be 1, but is not necessarily limited thereto.

As an example, the processor 140 may assign different priorities to the feature information in the order of the line continuity information > the homogeneity information > the texture complexity information > the chroma information, and apply a relatively high weight to the feature information having a high priority. For example, the weight may be managed as a hyper-parameter. The hyper-parameter may be a parameter directly set by a user. However, the hyper-parameter may also be adjusted (or tuned) to optimize its performance. For example, the processor 140 may determine an optimal value of the hyper-parameter based on all combinations of predefined hyper-parameter values. However, this configuration is only an example, and the priority of each feature information may be determined differently based on a specification of the electronic device 100, a projection environment, and/or a projection environment preference of the user.

According to an embodiment, the processor 140 may select a node having a largest number of grids included in the node among nodes of a decision tree and identify the same as the output region if the processor 140 classifies the wall surface into the plurality of regions by using the decision tree.

According to an embodiment, if the output region is identified, the processor 140 may adjust an input image to correspond to a size of the output region and identify the same.

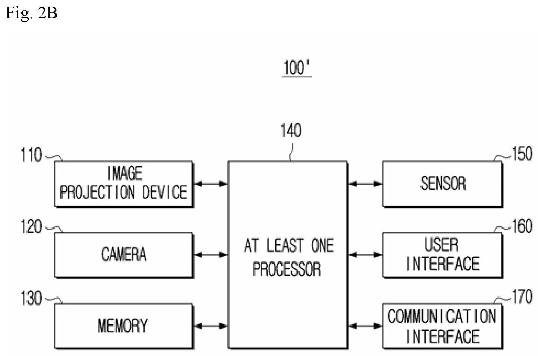

FIG. 2B is a view for describing a configuration of an electronic device 100' according to one or more embodiments.

Referring to FIG. 2B, the electronic device 100' may include the image projection device 110, the camera 120, the memory 130, at least one processor 140, a sensor 150, a user interface 160, and a communication interface 170.

The image projection device 110 may enlarge or reduce the image based on its distance (projection distance) from the projection surface. That is, the zoom function may be performed based on the distance of the image projection device 110 from the projection surface. Here, the zoom function may include a hardware method that adjusts a screen size by moving the lens, and a software method that adjusts the screen size by cropping the image. Meanwhile, image focusing may be needed if the zoom function is performed. For example, a focusing method may include a manual focusing method, an electric focusing method, or the like.

In addition, the image projection device 110 may provide the zoom and/or keystone and/or focusing functions by automatically analyzing its surrounding environment and projection environment without a user input. In detail, the projection device 110 may automatically provide the zoom/keystone/focusing functions based on a distance between the electronic device 100 and the projection surface that is detected through a sensor (e.g., time of flight (ToF) sensor, depth camera, distance sensor, infrared sensor, or illuminance sensor), information on a space where the electronic device 100 is currently disposed, information on an amount of ambient light, or the like.

The sensor 150 may include a sensor such as the distance sensor, an acceleration sensor (or gravity sensor), a geomagnetic sensor, a gyro sensor, or the like. The distance sensor may be a component for detecting a distance from the distance sensor to the projection surface. For example, the distance sensor may be implemented as any of various types of sensors such as an ultrasonic sensor, an infrared sensor, a light detection and ranging (LIDAR) sensor, a radio detection and ranging (RADAR) sensor, or a photodiode sensor. For example, the distance sensor, the acceleration sensor (or the gravity sensor), the geomagnetic sensor, or the gyro sensor may be used to acquire pitch information and/or yaw information.

In addition, the sensor 150 may include any of various types of sensors such as an image sensor, a touch sensor, a proximity sensor, a pressure sensor, or a position sensor.

The user interface 160 may be implemented as a device such as, for example but not limited to, a button, a touch pad, a mouse, or a keyboard, or may be implemented as a touchscreen, a remote control transceiver, or the like, which may perform the above-described display function and a manipulation input function together. The remote control transceiver may receive and/or transmit a remote control signal from and/or to an external remote control device by using any of various communication methods such as, for example but not limited to, at least one of infrared communication, Bluetooth communication, or wireless fidelity (Wi-Fi) communication.

As an example, the user interface 160 may receive the user input to adjust a magnification of the projected image, the user input to select and/or change at least one of the size or type of a sub-image, the user input to select a menu of a user interface (UI) screen, or the like.

The at least one communication interface 170 (hereinafter, the communication interface) may be implemented as any of various interfaces based on an implementation example of the electronic device 100'. For example, the communication interface 170 may communicate with an external device (e.g., user terminal), an external storage medium (e.g., USB memory), an external server (e.g., web hard), or the like by using any of various types of communication methods such as digital interface, access point (AP)-based Wi-Fi (wireless local area network (LAN) network), Bluetooth, Zigbee, wired/wireless local area network (LAN), wide area network (WAN), Ethernet, IEEE 1394, high definition multimedia interface (HDMI), USB, mobile high-definition link (MHL), audio engineering society/European broadcasting union (AES/EBU) communication, optical communication, or coaxial communication.

The electronic device 100' may further include a speaker, a tuner, and a demodulator based on an implementation example. The tuner (not shown) may receive a radio frequency (RF) broadcast signal by tuning a channel selected by the user among RF broadcast signals received through an antenna or by tuning all pre-stored channels. The demodulator (not shown) may receive and demodulate a digital intermediate frequency (DIF) signal converted by the tuner, and also perform channel decoding or the like. According to an embodiment, the input image received using the tuner may be processed using the demodulator (not shown) and then provided to the processor 140.

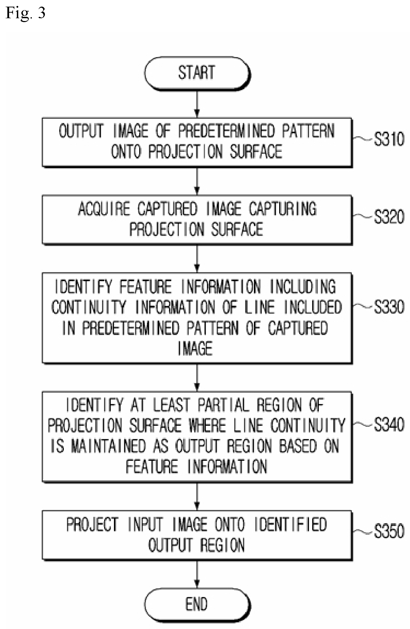

FIG. 3 is a flowchart for describing a control method of an electronic device according to one or more embodiments. The method of FIG. 3 may be performed by any one of the electronic device 100 illustrated in FIG. 2A and/or the electronic device 100' illustrated in FIG. 2B. For convenience of description, in the following description, it is assumed that the method is performed by the electronic device 100 according to an one or more embodiments.

Referring to FIG. 3, at operation 310, the electronic device 100 may output an image of a predetermined pattern onto the projection surface. For example, the electronic device 100 may output the image including the plurality of grid regions defined by the grid lines onto the projection surface.

At operation 320, the electronic device 100 may acquire the captured image of the projection surface.

At operation 330, the electronic device 100 may identify the feature information including the continuity information of the line included in the predetermined pattern of the captured image. For example, the electronic device 100 may identify the continuity information of the grid line in the captured image.

At operation 340, the electronic device 100 may identify at least a partial region of the projection surface where line continuity is maintained as the output region based on the feature information. For example, the electronic device 100 may identify at least a partial region of the projection surface where the line continuity is maintained as the output region based on the continuity information of the grid line.

At operation 350, the electronic device 100 may project the input image onto the identified output region. As an example, the electronic device 100 may adjust the input image to correspond to the identified size of the output region and project the same.

According to an embodiment, the electronic device 100 may identify the feature information including at least one of the texture complexity information including fine texture information for each grid region in the captured image, the homogeneity information including the information on the brightness change between the adjacent grid regions adjacent to each grid region, or the chroma information including the information on the color change between the adjacent grid regions adjacent to each grid region. The electronic device 100 may identify the output region on the projection surface based on at least one of the line continuity information, the texture complexity, the homogeneity information, or the chroma information.

According to an embodiment, the electronic device 100 may convert the captured image into the YUV image, and identify at least one of the line continuity information, the texture complexity information, or the homogeneity information based on the Y signal included in the YUV image. In addition, the electronic device 100 may identify the chroma signal based on the UV signals included in the YUV image.

According to an embodiment, the electronic device 100 may separate the Y signal included in the YUV image into the reflectance component and the illumination component. As an example, the electronic device 100 may identify the line continuity information corresponding to each grid region by applying the straight line estimation algorithm to the reflectance component. As an example, the electronic device 100 may identify the texture complexity information corresponding to each grid region based on a difference between first contour line information identified from the Y signal and second contour line information identified from the reflectance component. As an example, the electronic device 100 may identify the homogeneity information corresponding to each grid region based on whether the standard deviation of the homogeneity value identified from the reflectance component is greater than or equal to the threshold value.

According to an embodiment, the electronic device 100 may separate the UV signals included in the YUV image into the reflectance component and the illumination component, and identify the chroma information corresponding to each grid region based on the distance between the U and V components identified from the reflectance component.

According to an embodiment, the electronic device 100 may identify the output region on the projection surface by applying a different weight to each feature information based on the importance of the feature information acquired for each grid region.

According to an embodiment, the electronic device 100 may identify the output region on the projection surface by applying a different weight to the feature information based on at least one of a type or a category of the input image. The type of the input image may include at least one of type information such as real-time broadcast, over-the-top (OTT) content, or video-on-demand (VOD) content. The category of the input image may include at least one of category information such as movies, sports, or documentaries.

According to an embodiment, the electronic device 100 may use at least one trained artificial intelligence model for identifying at least one of the feature information or the output region.

As an example, the electronic device 100 may acquire the feature information by using the trained artificial intelligence model. For example, the artificial intelligence model may be trained to output the feature information of the projection surface included in the captured image if the captured image is input. For example, the electronic device 100 may use the trained artificial intelligence model individually for each type of the feature information. For example, the electronic device 100 may acquire each characteristic information by using the artificial intelligence model trained to output the line continuity information, the texture information, the homogeneity information, or the chroma information based on the input image.

As an example, the electronic device 100 may acquire information on the output region finally identified from the projection surface by using the trained artificial intelligence model. For example, the artificial intelligence model may be trained to acquire the feature information of the projection surface included in the captured image if the captured image is input, and to output the output region information based on the acquired feature information. For example, the artificial intelligence model may be trained to output the output region information based on the input feature information if the feature information is input from the captured image. For example, the output region information may include coordinate information corresponding to the output region in the captured image. For example, the output region information may include a plurality of coordinate information and probability information corresponding to the plurality of output regions in the captured image. For example, the probability information may include priority information for the plurality of coordinate information.

As an example, the fact that the artificial intelligence model is trained indicates that a basic artificial intelligence model (e.g., artificial intelligence model including any random parameter) is trained using a plurality of training data based on a learning algorithm, thereby generating a predefined operation rule or an artificial intelligence model set to perform a desired feature (or purpose). This learning may be accomplished using a separate server and/or system, but is not limited thereto, and may also be accomplished on the electronic device 100. An example of the learning algorithm may include supervised learning, unsupervised learning, semi-supervised learning, or reinforcement learning, but is not limited thereto.

As an example, the trained artificial intelligence model may be an on-device model included in the electronic device 100, but is not limited thereto. For example, the trained artificial intelligence model may be implemented on the server.

While FIG. 3 shows that the order is mapped for the steps for the convenience of description, the embodiments of the disclosure are not limited thereto, and the order of steps not related to the order or capable of being performed in parallel is not necessarily limited to the corresponding order.

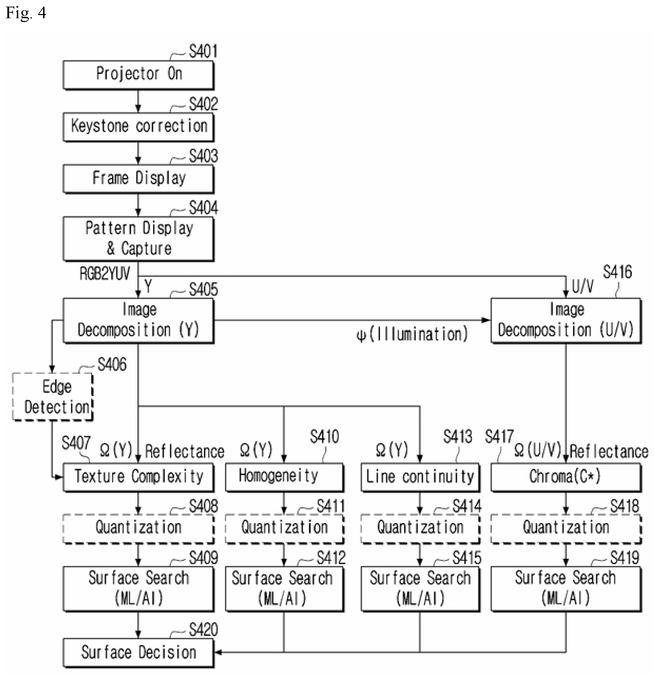

FIG. 4 is a flowchart for describing a control method of an electronic device according to one or more embodiments. The method of FIG. 4 may be performed by any one of the electronic device 100 illustrated in FIG. 2A and/or the electronic device 100' illustrated in FIG. 2B. For convenience of description, in the following description, it is assumed that the method is performed by the electronic device 100 according to an one or more embodiments.

Referring to FIG. 4, if the electronic device 100 is turned on at operation 401, the electronic device 100 may perform the keystone correction at operation 402.

The keystone correction may be a function for correcting a distortion of the image if the electronic device 100 is tilted and thus the output image is distorted. For example, the keystone correction may be performed manually or automatically. The keystone correction may be performed using any of various correction methods such as quadrilateral correction, or radial correction.

At operation 403, the electronic device 100 may output a frame image onto the projection surface based on a keystone correction result.

The frame image may be an image representing the output region. The frame image may be an element for facilitating the identification of the output region in the image captured using the camera 120. For example, the frame image may be an image in which a frame (or border) of the output region may be indicated using either a single color or a composite color. For example, the single color may be black or white, but is not limited thereto.

At operation 404, the electronic device 100 may output a pattern image including the predetermined pattern onto the projection surface, and capture the projection surface onto which the pattern image is output. Next, the electronic device 100 may convert the captured image, for example, the RGB image, into the YUV image, and separate the YUV image into the Y signal and the UV signals.

At operation 405, the electronic device 100 may acquire the reflectance component by separating the reflectance and illumination components through the image decomposition on the Y signal.

At operation 406, the electronic device 100 may detect a contour line component from the Y signal separated from the YUV image.

At operation 407, the electronic device 100 may identify the texture complexity information based on the contour line component detected from the Y signal. For example, the electronic device 100 may acquire the texture complexity value based on the difference value between the contour line information and the reflectance component detected from the Y signal. For example, the electronic device 100 may acquire the reflectance component from the Y signal by separating the same into the reflectance component and the illumination component through the image decomposition.

At operation 408, the electronic device 100 may acquire a quantized texture complexity value by quantizing (or binarizing) the texture complexity information.

At operation 409, the electronic device 100 may perform the surface search on the projection surface based on the quantized texture complexity value.

At operation 410, the electronic device 100 may identify the homogeneity information based on the Y signal. For example, the electronic device 100 may acquire the homogeneity value corresponding to each grid region based on the reflectance component detected from the Y signal.

At operation 411, the electronic device 100 may acquire the quantized homogeneity value by quantizing (or binarizing) the homogeneity information.

At operation 412, the electronic device 100 may perform the surface search on the projection surface based on the quantized homogeneity value.

At operation 413, the electronic device 100 may identify the line continuity information based on the Y signal. For example, the electronic device 100 may acquire the line continuity value corresponding to each grid region based on the reflectance component detected from the Y signal.

At operation 414, the electronic device 100 may acquire a quantized line continuity value by quantizing (or binarizing) the line continuity information.

At operation 415, the electronic device 100 may perform the surface search on the projection surface based on the quantized line continuity value.

At operation 416, the electronic device 100 may acquire the reflectance component by separating the reflectance and illumination components through the image decomposition on the UV signals.

At operation 417, the electronic device 100 may identify the chroma information based on the UV signals. For example, the electronic device 100 may acquire the chroma value corresponding to each grid region based on the reflectance component detected from the UV signals.

At operation 418, the electronic device 100 may acquire the quantized chroma value by quantizing (or binarizing) the chroma information.

At operation 419, the electronic device 100 may perform the surface search on the projection surface based on the quantized chroma value.

At operation 420, the electronic device 100 may determine a final surface based on a surface search result at operation 409, a surface search result at operation 412, a surface search result at operation 415, and a surface search result at operation 419.

While FIG. 4 shows that the order is mapped for the steps for the convenience of description, the embodiments of the disclosure are not limited thereto, and the order of steps not related to the order or capable of being performed in parallel is not necessarily limited to the corresponding order.

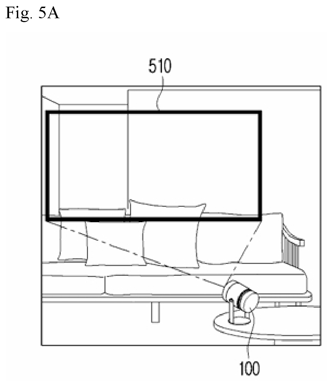

FIGS. 5A to 5C are views for describing a method for providing the pattern image for the surface search according to one or more embodiments.

According to an embodiment, the electronic device 100 may output a frame image 510 onto the projection surface as shown in FIG. 5A. For example, the electronic device 100 may output the frame image onto the projection surface based on the keystone-corrected output region. The frame image may be an element for facilitating the identification of the keystone-corrected output region in the captured image.

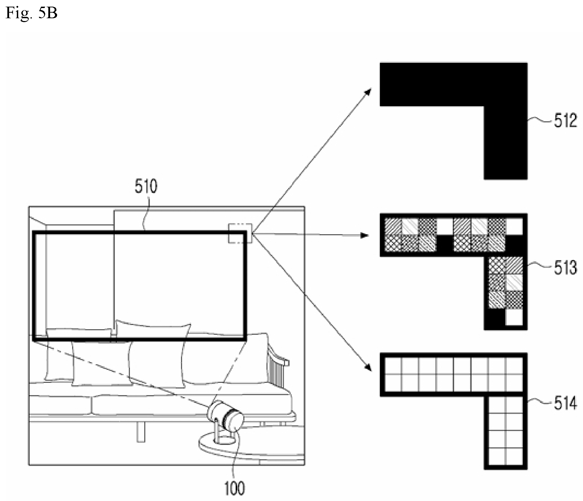

According to an embodiment, the frame image may be an image in a form of a frame in which a border 511 of the output region is indicated using either a single color 512 or 514 or a composite color 513, as shown in FIG. 5B. For example, the single color may be black 512 or white 514, but is not limited thereto. For example, if a projector is used in a dark illuminance environment, a black frame may be most easily recognized due to color contrast with a surrounding color in case of being captured using the camera 120. However, the black frame may not be easily recognized in a slightly bright environment. A white frame may be the easiest to be recognized if there is no interference from external light. Compared to an achromatic frame, a frame formed of the composite color may further improve a detection rate by responding to the ambient illuminance or color environment.

According to an embodiment, the electronic device 100 may acquire the captured image by capturing the projection surface, for example, the wall surface, onto which the pattern image is output by using the camera 120. For example, the camera 120 may have a field of view wide enough to capture the pattern image.

According to an embodiment, the electronic device 100 may detect a rectangular frame region in the captured image. For example, the electronic device 100 may detect edges, corners, or the like included in the rectangular frame region.

As an example, the electronic device 100 may apply the thresholding to identify an object based on the color of each pixel in the captured image. For example, the electronic device 100 may detect rectangles of separate objects by using the contour line detection and a minimum rectangular area search function, calculate an area (e.g., width*height) of each detected rectangle, and select a rectangle having a largest area among all the rectangles as a final result. As an example, the electronic device 100 may use an improved frame shape detection algorithm using color histogram analysis because the final result may be affected by the surrounding environment illumination, color interference, or the like. For example, the electronic device 100 may provide a notification to the user to position the image projection screen to enable the screen to be projected onto the wall surface if the rectangle is not detected.

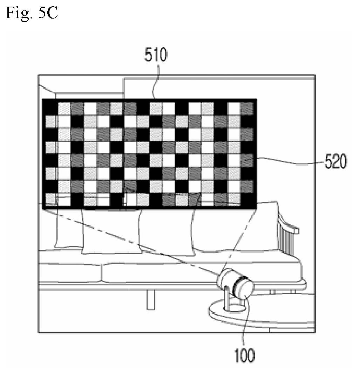

As an example, even if the frame is not detected as a closed shape (e.g., rectangle), the electronic device 100 may output a pattern image 520 that includes the grid region at a specific interval in the projector output image. For example, a pattern region may include the plurality of grid regions of the pattern image 520 within the frame image 510, as shown in FIG. 5C. For example, the electronic device 100 may output an image including the frame image 510 and an image including the plurality of grid regions of the pattern image 520 simultaneously. For example, the electronic device 100 may alpha blend and output the image including the frame image 510 and the image including the plurality of grid regions of the pattern image 520. Here, the alpha blending indicates a method of mixing a background RGB value and an RGB value on top of the background RGB value by assigning a new value referred to as alpha (A) to the color value RGB to thus generate an effect of overlapping another image on top of the image as if the images were transparent. For example, an alpha value may be classified as having a value ranging from 0 to 255 or 0.0 to 1.0, where 0 indicates completely transparent, and an opposite value, 255 (or the highest value such as 1.0), indicates fully opaque. Alternatively, 0 may indicate fully opaque, while the opposite value, 255 (or the highest value such as 1.0), may indicate completely transparent. For example, if 8 bits are assigned to the alpha value and may indicate the value ranging from 0 to 255, the larger the value, the higher a ratio of the corresponding pixel, and the lower the value, the lower the ratio. As an example, if an image I1 including the frame image 510 and an image I2 including the plurality of grid regions of the pattern image 520 are mixed with each other, a mixing operation may be expressed as an equation such as I1*Alpha + I2*(1-Alpha), I1*(1-Alapha)+I2*alpha, or I1*Alpha+I2.

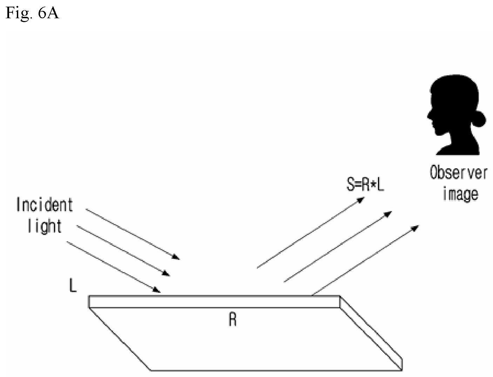

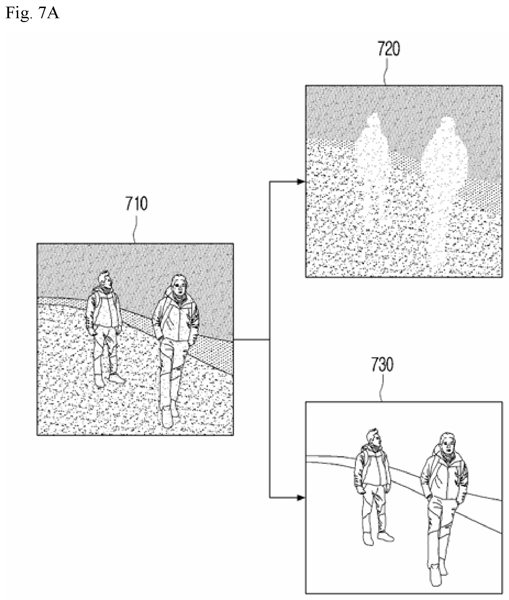

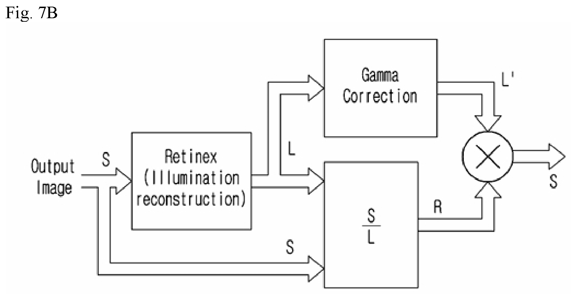

FIGS. 6A to 6D, 7A, and 7B are views for describing a principle of a method for separating features of a projection surface according to one or more embodiments.

According to an embodiment, as shown in FIG. 6A, the image shown to the user may be expressed as the product of Reflectance R and Illumination L.

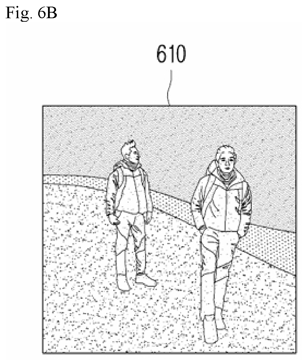

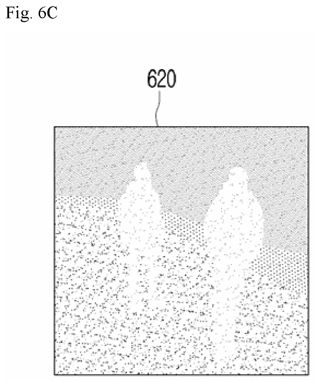

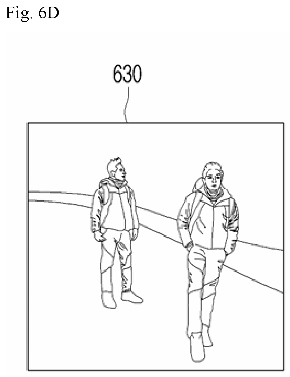

According to an embodiment, from a captured image 610 as shown in FIG. 6B, the electronic device 100 may separate an illumination component 620 as shown in FIG. 6C and a reflectance component 630 as shown in FIG. 6D.

As an example, as shown in FIG. 7A, the electronic device 100 may convert a captured image 710 into an YUV image, acquire the Y signal from the YUV image, and acquire a reflectance component 730 from the Y signal by performing image decomposition processing on the Y signal. For example, the electronic device 100 may separate the Y signal included in the YUV image into an illumination component 720 and the reflectance component 730.

For example, the electronic device 100 may acquire the reflectance component 730 from the Y signal through retinex decomposition processing.

For example, as shown in FIG. 7B, the electronic device 100 may separate the illumination component L from the Y signal through the retinex decomposition processing, and acquire a reflectance component R by using an illumination component L. Retinex is a combination of "retina" and "cortex", and may refer to the way in which a human retina and cerebral cortex work together to process visual information. For example, the electronic device 100 may perform the retinex decomposition processing through logarithmic transformation, spatial processing, and combination of multiple scales. However, the disclosure is not limited thereto, and the Y signal may be separated into the reflectance component and the illumination component by using Bayesian framework, deep learning, practical algorithm, single-scale retinex (SSR), filtering (e.g., Gaussian filtering), or the like.

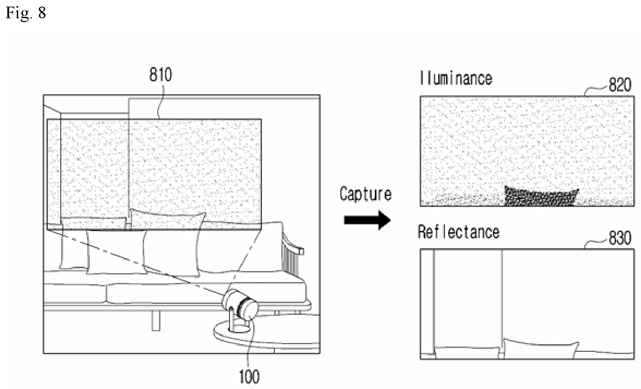

FIG. 8 is a view for describing a method for separating features of a projection surface according to one or more embodiments.

According to an embodiment, as shown in FIG. 8, the electronic device 100 may acquire the captured image by capturing the projection surface, e.g., wall surface 810.

According to an embodiment, the electronic device 100 may capture the projection surface and separate the acquired captured image into an illumination component 820 and a reflectance component 830. The electronic device 100 may then acquire the feature information of the projection surface based on the reflectance component 830 representing a unique feature of the projection surface 810, and determine the output region for outputting the image onto the projection surface 810 based on the acquired feature information.

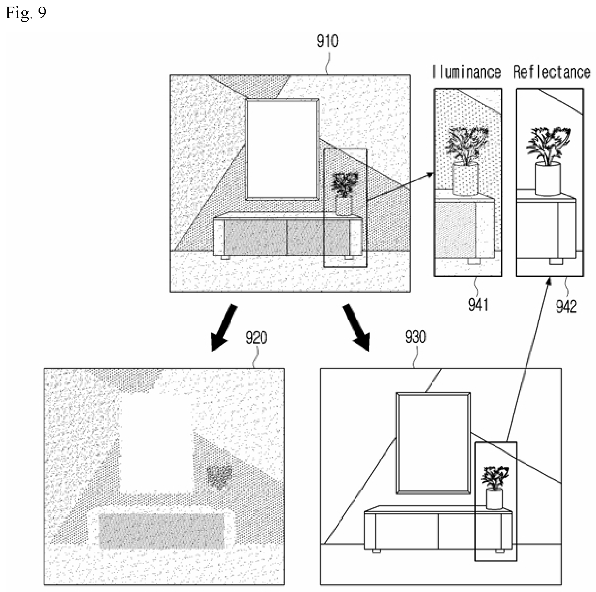

FIG. 9 is a view for describing a method for separating features of the projection surface according to one or more embodiments.

According to an embodiment, as shown in FIG. 9, the electronic device 100 may acquire a captured image 910 by capturing the projection surface, for example, a wall surface.

According to an embodiment, the electronic device 100 may separate the acquired captured image 910 into an illumination component 920 and a reflectance component 930. For example, the electronic device 100 may convert the captured RGB image 910 into the YUV image, and separate the YUV image into the Y signal and the UV signals.

The electronic device 100 may then separate the Y signal into the illumination component 920 and the reflectance component 930.

The electronic device 100 may then acquire the feature information of the projection surface based on the reflectance component 930 representing a unique feature of the projection surface, and determine the output region for outputting the image onto the projection surface based on the acquired feature information.

As shown in FIG. 9, a reflection component 942, acquired by separating an illumination component 941 corresponding to a specific region 911 in the captured image 910 may be seen to have texture edge information or the like significantly emphasized or clearly improved.

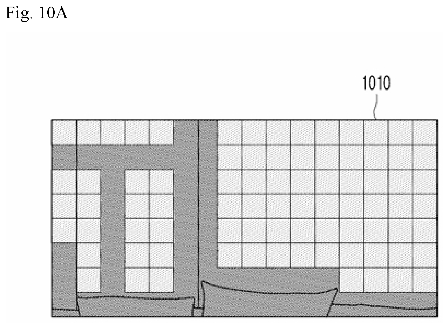

FIGS. 10A to 10C are views for describing methods for acquiring feature information of a projection surface according to one or more embodiments.

FIG. 10A is a view showing the homogeneity information according to an embodiment. As an example, the electronic device 100 may acquire a homogeneity map 1010 based on the Y signal in the YUV image. For example, the electronic device 100 may acquire the homogeneity map that includes the homogeneity information for each grid region.

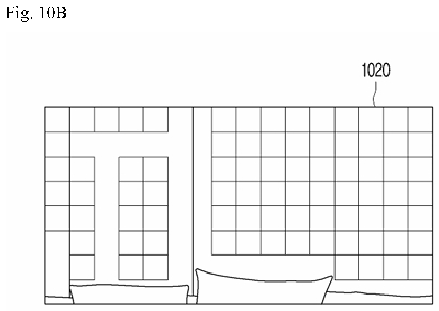

FIG. 10B is a view showing the line continuity information according to an embodiment. As an example, the electronic device 100 may acquire a line continuity map 1020 based on the Y signal in the YUV image. For example, the electronic device 100 may acquire the line continuity map that includes the line continuity information for each grid region.

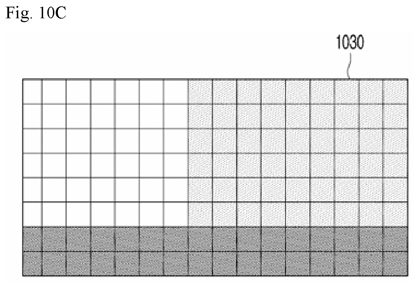

FIG. 10C is a view showing the chroma information according to an embodiment. As an example, the electronic device 100 may acquire a chroma map 1030 based on the UV signals in the YUV image. For example, the electronic device 100 may acquire the chroma map that includes the chroma information for each grid region.

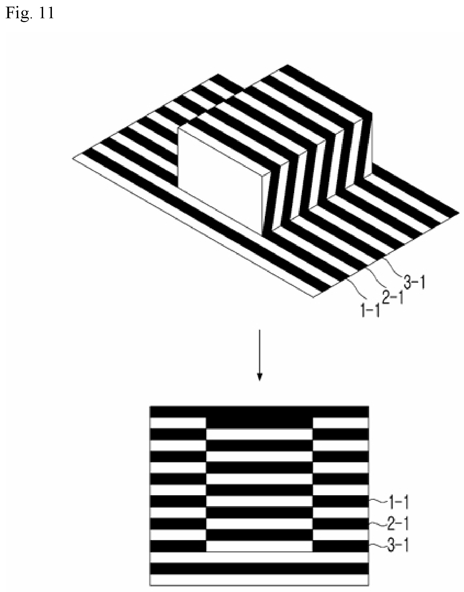

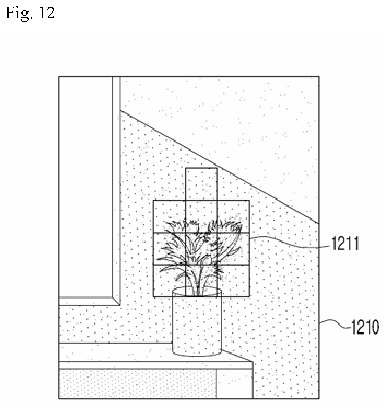

FIGS. 11 and 12 are views for describing the line continuity information according to one or more embodiments.

As an example, the line continuity information may be identified based on whether linearity of each of the grid lines in the captured image is maintained (e.g., whether a line continues continuously). For example, as shown in FIG. 11, if the projection surface has a protruded area as shown on an upper part of the drawing, the linearity (or a feature that appears as the straight line) of line 1-1, 2-1, 3-1, or the like (e.g., grid line) in the captured image may be broken as shown on a lower part of the drawings. In this case, it may be identified that the line continuity is not maintained in a corresponding region on the projection surface.

As an example, as shown in FIG. 12, it is assumed that the projection surface includes an object disposed in front of the wall surface, for example, a vase. In this case, the line may be broken in a region 1211 where the vase is disposed in a captured image 1210 that captures the projection surface due to a depth difference between the vase and the wall surface. In this case, the electronic device 100 may determine the output region for outputting the projected image by avoiding the corresponding region.

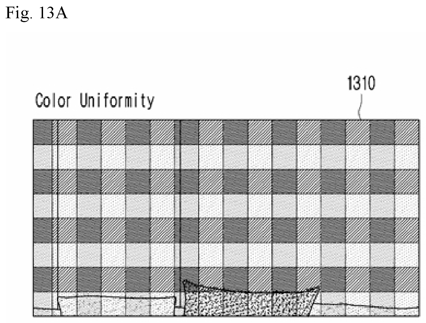

FIGS. 13A to 13C are views for describing the chroma information according to one or more embodiments.

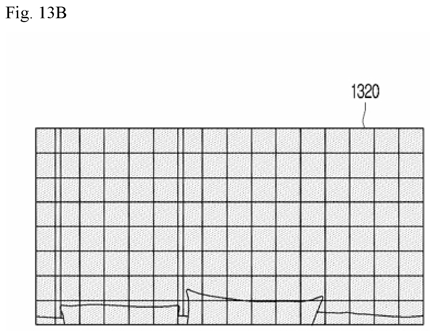

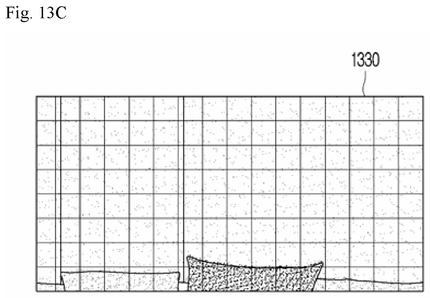

According to an embodiment, the electronic device 100 may convert a captured image 1310 including the grid region as shown in FIG. 13A into a YUV image 1320 as shown in FIG. 13B. The electronic device 100 may acquire chroma information 1330 including the chroma value of each grid region as shown in FIG. 13C based on the UV signals in the YUV image 1320. The chroma information may include the information on the color change between the adjacent grid regions for each grid region in the grid output image. As an example, at least one of the standard deviation, the gradient, or the variance may be used to acquire the chroma information. As an example, the processor 140 may calculate the chroma information for each grid region based on whether the standard deviation σ_{C} of the chroma value acquired using the UV signal values of each grid region in the captured image is greater than or equal to the threshold value σ_{Thr2}.

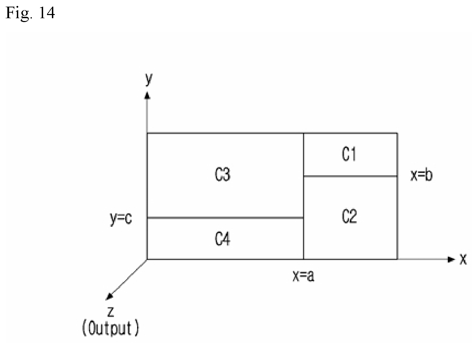

FIG. 14 is a view for describing a method for identifying the output region according to one or more embodiments.

According to an embodiment, the electronic device 100 may identify the output region on the projection surface by applying the predetermined algorithm to the feature information calculated for each grid region.

For example, as shown in FIG. 14, the electronic device 100 may classify the projection surface, e.g., wall surface, into a plurality of regions c1, c2, c3, and c4 based on the features by using the machine learning algorithm such as the decision tree. According to an embodiment, the electronic device 100 may use the distance information between the respective grid regions in the clustering algorithm to identify the largest possible output region on the projection surface. As an example, the electronic device 100 may classify the grid regions that are close to each other as the end terminals in the clustering algorithm.

For example, the electronic device 100 may perform the clustering algorithm by setting the distance between all the grid regions adjacent to the specific grid region as the first variable x1, and the feature information value corresponding to the specific grid region, for example, its line continuity information, texture complexity information, homogeneity information, and chroma information, as the second to fifth variables x2 to x5, respectively. For example, the electronic device 100 may calculate the first variable x1 as the distance between all the grid regions adjacent to the specific grid region based on the Manhattan distance as shown in Equation 5 above.

As an example, each parameter may be classified into two groups based on whether the parameter is less than a threshold value s, as shown in Equation 6 below. [Equation 6] $\begin{matrix}{R}_{1} \left(j, s\right) = \left\{\left.x\right|{x}_{j}\leq s\right\} \\ {R}_{2} \left(j, s\right) = \left\{\left.x\right|{x}_{j}>s\right\}\end{matrix}$

As an example, the electronic device 100 may determine the final output region based on a general equation of the decision tree as shown in Equation 7 below. [Equation 7] $\begin{matrix}{argmin}_{j , s} \left[{min}_{{c}_{1}}{\sum }_{{x}_{i} ∈ {R}_{1} \left(j, s\right)} {\left({y}_{i}-{c}_{1}\right)}^{2}+{min}_{{c}_{2}}{\sum }_{{x}_{i} ∈ {R}_{2} \left(j, s\right)} {\left({y}_{i}-{c}_{2}\right)}^{2}\right] \\ {= argmin}_{j , s} \left[{\sum }_{{x}_{i} ∈ {R}_{1} \left(j, s\right)} {\left({y}_{i}-{\hat{c}}_{1}\right)}^{2}+{\sum }_{{x}_{i} ∈ {R}_{2} \left(j, s\right)} {\left({y}_{i}-{\hat{c}}_{2}\right)}^{2}\right] \\ {\hat{c}}_{1} = ave \left(\left.{y}_{i}\right|{x}_{i}∈{R}_{1}\left(j, s\right)\right. and {\hat{c}}_{2} = ave \left(\left.{y}_{i}\right|{x}_{i}∈{R}_{2}\left(j, s\right)\right.\end{matrix}$

c1 or c2 indicates an average value of each class, and y1 may be the feature information value corresponding to each grid.

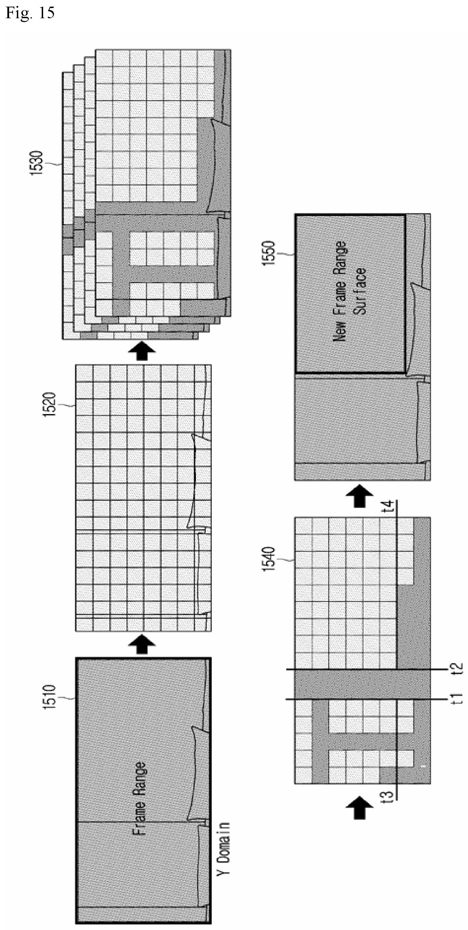

FIG. 15 is a view for describing a method for determining the final output region according to one or more embodiments.

According to an embodiment, the electronic device 100 may output a frame image 1510 onto the projection surface and output a pattern image 1520 including the grid region at the specific interval.

According to an embodiment, the electronic device 100 may acquire feature information 1530 based on the image capturing the projection surface onto which the pattern image 1520 is output. For example, the feature information 1530 may include at least one of the line continuity information, the texture information, the homogeneity information, or the chroma information. As an example, the electronic device 100 may determine the output region by using the feature information selected by the user among the plurality of feature information. As an example, the electronic device 100 may determine the output region by using the feature information corresponding to the type of the input image among the plurality of feature information.

According to an embodiment, the electronic device 100 may classify the projection surface into the plurality of regions 1540 based on the feature information 1530 and select the final output region 1550 among the plurality of regions 1540.

As an example, the electronic device 100 may calculate an integrated feature value by operating the feature value of each grid region calculated for each type of feature information based on the weight of each feature information, and classify the projection surface into the plurality of regions by setting boundary lines t1, t2, t3, and t4 based on an average value or a median value of the integrated feature value. In this case, the electronic device 100 may determine the output region based on the feature value corresponding to each of the plurality of regions and the number of grid regions included in the plurality of regions.

As an example, the electronic device 100 may determine the output region by identifying the feature information having the highest weight among each feature information, for example, a region where a value of the line continuity information is greater than or equal to the threshold value, and a region where a value of other feature information is greater than or equal to the threshold value.

As an example, the electronic device 100 may classify the plurality of grid regions by using the decision tree based on the feature value corresponding to each of the plurality of grid regions, and determine the output region by selecting the node having the largest number of grid regions among the nodes included in the decision tree.

However, this configuration is only an example, and another machine learning algorithm or ensemble method may be used to determine a new output region. Accordingly, the projected image may be output onto a homogeneous surface without any interference from another object or an uneven wall surface.

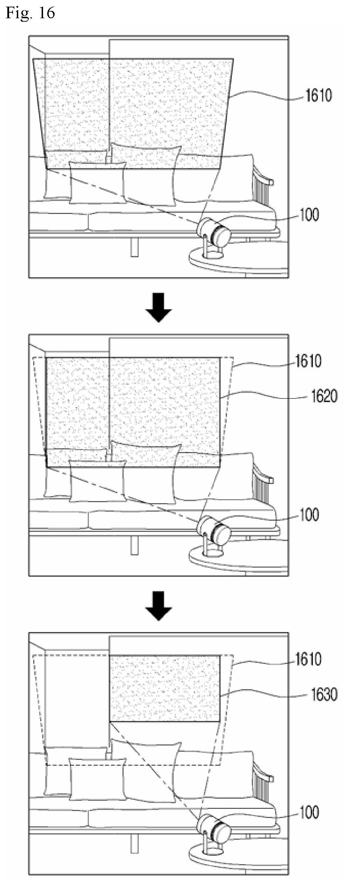

FIG. 16 is a view for describing a method for determining the final output region according to one or more embodiments.

According to an embodiment, the electronic device 100 may identify a keystone-corrected projection region 1620 by performing the keystone correction on a projection region 1610 in a projection environment without any dedicated screen. Next, the electronic device 100 may identify the largest region having a uniform feature in the keystone-corrected projection region 1620 as a final projection region 1630 by analyzing the feature information of the keystone-corrected projection region 1620 as described above, if the keystone-corrected projection region 1620 is a region having a non-uniform feature. Accordingly, the user may view the image clearly and neatly using the final projection region 1630 having a uniform feature.

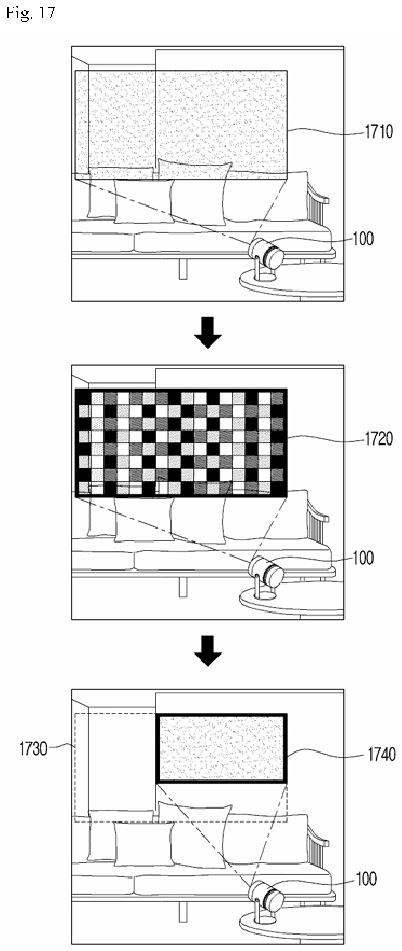

FIG. 17 is a view for describing a method for determining the final output region according to one or more embodiments.

According to an embodiment, the electronic device 100 may output a frame image 1710 by identifying the keystone-corrected projection region in the projection environment without any dedicated screen. Next, the electronic device 100 may output a pattern image 1720 together with the frame image 1710. Next, the electronic device 100 may identify the largest region having the uniform feature within a region 1730 of the frame image as a final projection region 1740 based on the captured image of the projection surface. Accordingly, the user may view the image clearly and neatly.

Each operation according to the various embodiments described above may be performed by the processor 140, and a module for each operation may be used if necessary. For example, each module may be implemented as at least one software, at least one hardware, and/or a combination thereof. Each module may be implemented to perform the operation by using a predefined algorithm, a predefined equation, and/or the trained artificial intelligence model. However, at least some modules may be distributed to the external device.

According to the various embodiments described above, the optimal projection region may be searched for and determined even without any dedicated screen, thereby enabling the optimal image projection. In particular, the projected image may be stably output even onto an uneven projection surface, thereby improving user convenience. Meanwhile, the methods according to the various embodiments of the disclosure described above may be implemented only by software upgrade and/or hardware upgrade of the existing display device and/or server.

In addition, the various embodiments of the disclosure described above may be performed through an embedded server included in the electronic device, or an external server of the electronic device.

Meanwhile, according to an embodiment of the disclosure, the various embodiments described above may be implemented in software including an instruction stored on a machine-readable storage medium (for example, a computer-readable storage medium). A machine may be a device that invokes the stored instruction from a storage medium, may be operated based on the invoked instruction, and may include the electronic device (e.g., electronic device A) according to the disclosed embodiments. If the instruction is executed by the processor, the processor may directly perform a function corresponding to the instruction or other components may perform the function corresponding to the instruction under control of the processor. The instruction may include a code generated or executed by a compiler or an interpreter. The machine-readable storage medium may be provided in a form of a non-transitory storage medium. Here, the term "non-transitory" indicates that the storage medium is tangible without including a signal, and does not distinguish whether data are semi-permanently or temporarily stored on the storage medium.

In addition, according to an embodiment of the present disclosure, the methods according to the various embodiments described above may be included and provided in a computer program product. The computer program product may be traded as a commodity between a seller and a purchaser. The computer program product may be distributed in a form of the machine-readable storage medium (for example, a compact disc read only memory (CD-ROM)), or may be distributed online through an application store (for example, PlayStore^{TM}). In case of the online distribution, at least a part of the computer program product may be at least temporarily stored or temporarily generated on a storage medium such as the memory of a manufacturer server, an application store server, or a relay server.

In addition, each of the components (for example, modules or programs) according to the various embodiments described above may include a single entity or a plurality of entities, and some of the corresponding sub-components described above may be omitted or other sub-components may be further included in the various embodiments. Alternatively or additionally, some of the components (for example, the modules or the programs) may be integrated into the single entity, and may perform functions performed by the respective corresponding components before being integrated in the same or similar manner. Operations performed by the modules, the programs, or other components according to the various embodiments may be executed in a sequential manner, a parallel manner, an iterative manner, or a heuristic manner, at least some of the operations may be performed in a different order or be omitted, or other operations may be added.

Although the example embodiments are shown and described in the present disclosure as above, the present disclosure is not limited to the above-described specific embodiments, and may be variously modified by those skilled in the art to which the present disclosure pertains without departing from the gist of the present disclosure as claimed in the accompanying claims. These modifications should also be understood to fall within the scope and spirit of the present disclosure. It should also be understood that any embodiment(s) described in the present disclosure may be used in conjunction with any other embodiment(s) described in the present disclosure.

## Claims

1. An electronic device comprising:
an image projection device;
a camera;
a memory storing one or more instructions; and
at least one processor including a processing circuitry,
wherein the at least one processor is configured to execute the one or more instructions individually or collectively, to:
control the image projection device to output an image including a predetermined pattern onto a projection surface;
control the camera to acquire a captured image of the projection surface;
identify feature information including continuity information of a line included in the predetermined pattern in the captured image;
identify at least a partial region of the projection surface as an output region based on the feature information; and
control the image projection device to project an input image onto the identified output region.

2. The electronic device as claimed in claim 1, wherein the at least one processor is further configured to execute the one or more instructions individually or collectively, to:
control the image projection device to output the image including a plurality of grid regions defined by grid lines onto the projection surface;
identify continuity information of a grid line in the captured image;
identify at least a partial region of the projection surface as the output region based on the continuity information of the grid line.

3. The electronic device as claimed in claim 2, wherein the at least one processor is further configured to execute the one or more instructions individually or collectively, to:
identify the feature information including at least one of texture complexity information including fine texture information for each grid region in the captured image, homogeneity information including information on a brightness change between adjacent grid regions adjacent to each grid region, or chroma information including information on a color change between the adjacent grid regions adjacent to each grid region; and
identify the output region on the projection surface based on at least one of the line continuity information, the texture complexity information, the homogeneity information, or the chroma information.

4. The electronic device as claimed in claim 3, wherein the at least one processor is further configured to execute the one or more instructions individually or collectively, to:
convert the captured image into a luminance-chrominance (YUV) image;
identify at least one of the line continuity information, the texture complexity information, and the homogeneity information based on a Y signal included in the YUV image; and
identify a chroma signal based on UV signals included in the YUV image.

5. The electronic device as claimed in claim 4, wherein the at least one processor is further configured to execute the one or more instructions individually or collectively, to:
separate the Y signal included in the YUV image into a reflectance component and an illumination component;
identify the line continuity information corresponding to each grid region by applying a straight line estimation algorithm to the reflectance component;
identify the texture complexity information corresponding to each grid region based on a difference between first contour line information identified from the Y signal and second contour line information identified from the reflectance component; and
identify the homogeneity information corresponding to each grid region based on whether a standard deviation of a homogeneity value identified from the reflectance component is greater than or equal to a threshold value.

6. The electronic device as claimed in claim 4, wherein the at least one processor is further configured to execute the one or more instructions individually or collectively, to:
separate the UV signals included in the YUV image into a reflectance component and an illumination component; and
identify the chroma information corresponding to each grid region based on a distance between U and V components identified from the reflectance component.

7. The electronic device as claimed in claim 3, wherein the at least one processor is further configured to execute the one or more instructions individually or collectively, to identify the output region on the projection surface by applying a different weight to each feature information based on an importance of the feature information acquired for each grid region.

8. The electronic device as claimed in claim 3, wherein the at least one processor is further configured to execute the one or more instructions individually or collectively, to identify the output region on the projection surface by applying a different weight to each feature information based on at least one of a type or a category of the input image.

9. The electronic device as claimed in claim 3, wherein the at least one processor is further configured to execute the one or more instructions individually or collectively, to identify the output region on the projection surface by applying a dot product operation or a machine learning clustering algorithm to the feature information acquired for each grid region.

10. The electronic device as claimed in claim 3, wherein the at least one processor is further configured to execute the one or more instructions individually or collectively, to use at least one trained artificial intelligence model for identifying at least one of the feature information or the output region.

11. The electronic device as claimed in claim 1, wherein the at least one processor is further configured to execute the one or more instructions individually or collectively, to: control the image projection device to adjust the input image to correspond to a size of the identified output region and project the adjusted image onto the identified output region.

12. A control method of an electronic device, the method comprising:
outputting an image including a predetermined pattern onto a projection surface;
acquiring a captured image of the projection surface;
identifying feature information including continuity information of a line included in the predetermined pattern in the captured image;
identifying at least a partial region of the projection surface as an output region based on the feature information; and
projecting an input image onto the identified output region.

13. The method as claimed in claim 12, wherein the outputting the image includes outputting the image including a plurality of grid regions defined by grid lines onto the projection surface,
wherein the identifying the feature information includes identifying continuity information of a grid line in the captured image, and
wherein the identifying the output region includes identifying at least a partial region of the projection surface as the output region based on the continuity information of the grid line.

14. The method as claimed in claim 13, wherein the identifying the feature information includes:
identifying the feature information including at least one of texture complexity information including fine texture information for each grid region in the captured image, homogeneity information including information on a brightness change between adjacent grid regions adjacent to each grid region, or chroma information including information on a color change between the adjacent grid regions adjacent to each grid region, is identified, and
wherein the identifying the output region includes identifying the output region based on at least one of the line continuity information, the texture complexity information, the homogeneity information, or the chroma information.

15. A non-transitory computer-readable medium storing a computer instruction for causing an electronic device, when executed by at least one processor of the electronic device, to perform:
outputting an image including a predetermined pattern onto a projection surface,
acquiring a captured image of the projection surface,
identifying feature information including continuity information of a line included in the predetermined pattern in the captured image,
identifying at least a partial region of the projection surface as an output region based on the feature information, and
projecting an input image onto the identified output region.
